# EUROPÄISCHE PATENTSCHRIFT

(11) **EP 2 920 028 B1**
(45) Veröffentlichungstag und Bekanntmachung des Hinweises auf die Patenterteilung: **11.01.2017**
(21) Anmeldenummer: 13785478.2
(22) Anmeldetag: 01.11.2013
(51) Int. Cl.: G01S 13/87, B60Q 9/00, G01S 13/93

(54) **VERFAHREN UND VORRICHTUNG ZUR WARNUNG VOR QUERVERKEHR BEI AUSPARKSITUATIONEN**
METHOD AND DEVICE FOR WARNING AGAINST CROSS TRAFFIC WHEN LEAVING A PARKING SPACE
PROCÉDÉ ET DISPOSITIF DE SIGNALISATION DU TRAFIC TRANSVERSAL LORS DE MANOEUVRES DE SORTIE DE STATIONNEMENT

(30) Priorität: 14.11.2012 DE 102012022276
(43) Veröffentlichungstag der Anmeldung: 23.09.2015
(73) Patentinhaber: Volkswagen Aktiengesellschaft, 38440 Wolfsburg (DE)
(72) Erfinder: MAX, Stephan, 38518 Gifhorn (DE); BAUMANN, Peter, 38162 Cremlingen (DE); KATZWINKEL, Reiner, 38527 Meine (DE)
(86) Internationale Anmeldenummer: PCT/EP2013/072876
(87) Internationale Veröffentlichungsnummer: WO 2014/075936

(56) Entgegenhaltungen:
- EP-A1- 1 878 615
- DE-A1-102011 016 775
- US-A1- 2010 201 508

## Beschreibung

Die Erfindung betrifft ein Verfahren zur Warnung vor Querverkehr bei Ausparksituationen, insbesondere rückwärtigen Ausparksituationen, eines Kraftfahrzeugs gemäß dem Oberbegriff des Anspruchs 1 sowie eine entsprechende Vorrichtung gemäß dem Oberbegriff des Anspruchs 10.

Generell ist das Ausparken aus Parklücken bzw. allgemein das Einfahren auf eine Fahrbahn bei unübersichtlichen Verhältnissen aufgrund des immer möglichen Querverkehrs für den Fahrer schwierig. Bei ungünstigen Sichtverhältnissen, wie rückwärtigem Ausparken aus einer Querparklücke oder Einfahren auf eine Fahrbahn aus einer engen Einfahrt, kommt es häufig vor, dass sich der Fahrer in den Fahrbahnbereich vorsichtig vortasten muss, was aber nicht notwendigerweise eine mögliche Kollisionsgefahr verringert.

Um dem Fahrer beim unübersichtlichen Einfahren auf eine Fahrbahn zu unterstützen, sind Umfeldüberwachungssysteme mit Fernbereichssensoren bekannt, wobei die Fernbereichssensoren so im Bereich der Fahrzeugecken angeordnet sind, dass sie Querverkehr bei einer Einfahrt des Fahrzeugs auf eine Fahrbahn frühzeitig erkennen können. Als Fernbereichssensoren kommen üblicherweise Radar- oder Lidarsensoren zur Anwendung, wobei mittlerweile auch Videokameras Anwendung finden.

So ist aus der Druckschrift EP 1 878 615 A1 eine Warneinrichtung und ein Verfahren zur Umfeldüberwachung eines Fahrzeugs bekannt, wobei die Warneinrichtung im Bereich jeder Fahrzeugecke des Fahrzeugs einen Umfeldsensor aufweist. Ein derartiger Umfeldsensor umfasst einen Nahbereichssensor, sowie zwei Fernbereichssensoren. Der Nahbereichssensor und einer der beiden Fernbereichsensoren blicken dabei bezüglich der Fahrzeuglängsachse in seitlicher Richtung, während die Beobachtungsrichtung des zweiten Fernbereichssensor im Wesentlichen schräg nach vorne bzw. bei den hinteren Umfeldsensoren schräg nach hinten zeigt. Mit dieser Anordnung der Fernbereichssensoren kann der Querverkehr sowohl bei Vorwärtsfahrt als auch bei Rückwärtsfahrt auf eine im Wesentlichen senkrecht zur Fahrtrichtung verlaufende Fahrbahn festgestellt werden. Ferner kann der Querverkehr auch beim Ausparken aus einer Längsparklücke detektiert werden. Zusätzlich weist die Warneinrichtung des Fahrzeugs weitere seitlich am Fahrzeug angeordnete Nahbereichssensoren auf. Mittels dieser Nahbereichsensoren sowie den Nahbereichssensoren der an den Fahrzeugecken befindlichen Umfeldsensoren wird das unmittelbare seitliche Umfeld des Fahrzeugs erkannt. Ein seitlicher Fernbereichssensor wird daher erst dann aktiviert, wenn die entsprechenden Nahbereichssensoren erkannt haben, dass dem seitlichen Fernbereichssensor kein Hindernis im Weg steht. Mit anderen Worten, befindet sich seitlich des Fahrzeugs eine Hindernis, wie die Wand einer Toreinfahrt oder ein in der Nachbarparklücke parkendes Fahrzeug bei der Ausfahrt aus einer Querparklücke, so wird auf dieser Seite der seitliche Fernbereichssensor erst dann aktiviert, wenn die Nahbereichssensoren eine sprunghafte Änderung des Abstands zum seitlichen Hindernis feststellen, die Blickrichtung des seitlichen Fernbereichssensors also frei ist. Stellt der Fernbereichssensor einen Querverkehr, also ein seitlich auf der Fahrbahn herannahendes Fahrzeug, fest, so wird eine Warnung an den Fahrer abgegeben. Alternativ kann die Warneinrichtung als Funktion des Gefährdungspotentials auch die Bremsanlage des Fahrzeugs betätigen und das Fahrzeug zum Stillstand bringen.

Da der Fahrer keine Kenntnis darüber hat, wann der Fernbereichssensor bei Vorhandensein eines seitlichen Hindernisses aktiviert wird, kann eine Bremsung des Fahrzeugs als mögliche Reaktion auf Querverkehr für den Fahrer überraschend erfolgen.

Aus der Druckschrift DE 10 2011 013 486 A1 ist ein Fahrerassistenzsystem bekannt, welches Sensoren zur Erfassung eines Querverkehrs aufweist, wobei bei einem erkannten Querverkehr die Kollisionswahrscheinlichkeit berechnet und beim Überschreiten einer vorgegebenen Schwelle ein Bremsmanöver ausgelöst wird.

Die Druckschrift DE 10 2009 060 165 A1 offenbart ein Verfahren und eine Vorrichtung zum Ausparken eines Fahrzeugs aus einer unter einem Winkel zur Längsrichtung der entsprechenden Fahrbahn angeordneten Querparklücke, wobei Nahbereichsensoren des Fahrzeugs Umfeldinformationen über seitliche Bereiche des Fahrzeugs erfassen und zur Querlenkung des Fahrzeugs herangezogen werden.

Die Druckschrift DE 10 2008 047 284 A1 beschreibt eine Fahrerassistenzvorrichtung zum Unterstützen eines Fahrers beim Ausparken aus einer Längsparklücke, wobei mittels Fernbereichsensoren der Querverkehr auf den seitlichen Fahrbahnen beobachtet wird.

Die Druckschrift DE 10 2011 016 775 A1 betrifft ein Assistenzsystem für ein Fahrzeug zur Unterstützung eines Ein- oder Ausparkvorganges sowie zur Unterstützung der Vorbeifahrt an Hindernissen in Engstellen, mit wenigstens einem Sensorsystem zur Erfassung des Abstandes des Fahrzeuges zu in der Nähe befindlichen Objekten und wenigstens einer Anzeigeeinrichtung zur optischen, akustischen und/oder taktilen Anzeige von Abstandsinformationen zu den Objekten, wobei wenigstens eine Vorrichtung zur Erfassung von Positionsveränderungen des Fahrzeuges und eine Rechenvorrichtung zur Berechnung der relativen Position der Objekte in Abhängigkeit der Positionsveränderung des Fahrzeuges vorgesehen sind, wobei das Assistenzsystem dazu ausgebildet ist, in der Anzeigeeinrichtung ein von dem Sensorsystem früher erfasstes Objekt anzuzeigen, das sich zum Anzeigezeitpunkt außerhalb des Erfassungsbereichs des Sensorsystems und in einem kollisionsgefährdeten Bereich relativ zum Fahrzeug befindet.

Die Druckschrift US 2010/0201508 A1 beschreibt ein System in einem Kraftfahrzeug zur Warnung vor rückseitigem Querverkehr, wobei das System eine rückseitige Kamera zur Erzeugung eines Abbildes der rückseitigen Umgebung des Fahrzeugs, eine Einrichtung zur Detektion des rückseitigen Querverkehrs und eine Steuereinrichtung zum Erzeugen einer Warnung vor dem rückseitigen Querverkehr aufweist.

Der Erfindung liegt daher die Aufgabe zugrunde, ein Verfahren und eine Vorrichtung zur Warnung vor Querverkehr beim Ausparken eines Fahrzeugs aus einer Querparklücke zu schaffen, die den Fahrer fortlaufend beim Ausparkvorgang über die Umgebungssituation informieren.

Diese Aufgabe wird durch ein Verfahren mit den Merkmalen des Anspruchs 1 sowie durch eine Vorrichtung mit den Merkmalen des Anspruchs 10 gelöst. Bevorzugte Ausführungsformen der Erfindung sind Gegenstand der Unteransprüche.

Das erfindungsgemäße Verfahren zur Warnung eines Fahrers eines Egofahrzeugs vor Querverkehr bei einer Ausparksituation, insbesondere einer rückwärtigen Ausparksituation aus einer Querparklücke, wobei das Kraftfahrzeug zumindest im Bereich der heckseitigen Ecken Fernbereichsensoren zur Detektion von möglichem Querverkehr und seitliche Nahbereichsensoren zur Detektion des nahen Fahrzeugumfeldes aufweist, und wobei eine Warnung erzeugt wird, wenn zumindest einer der Fernbereichssensoren Querverkehr detektiert, weist die folgende Schritte auf:
- Vermessen des nahen seitlichen Umfeldes des Egofahrzeugs beim Ausparken,
- Ermitteln aus den Ergebnissen der Nahbereichsdetektion, ob die Fernbereichsensoren freie Sicht auf den Querverkehr haben, und
- Erzeugen eines Hinweises an den Fahrer, falls einer oder beide Fernbereichsensoren keine freie Sicht auf den Querverkehr haben.

Ist das Fahrzeug mit Fernbereichsensoren an allen vier Ecken des Fahrzeugs ausgestattet, so werden vorzugsweise nur diejenigen Fernbereichsensoren in Fahrtrichtung des Fahrzeugs betrachtet. Diese sind bei einem rückwärtigen Ausparkvorgang die heckseitigen Sensoren und bei einem vorwärtigen Ausparkvorgang die frontseitigen Sensoren, wobei insbesondere Ausparkvorgänge aus Querparklücken betrachtet werden.

Fernbereichsensoren sind beispielsweise Radarsensoren, Lidarsensoren oder Videosensoren. Als Nahbereichsensoren werden üblicherweise Ultraschallsensoren verwendet, wie sie beispielsweise in Park-Lenkassistenten Verwendung finden.

Vorzugsweise erfährt der Fahrer durch den Hinweis, dass ein Fernbereichsensor und insbesondere welcher Fernbereichsensor keine freie Sicht auf den Querverkehr hat, also blockiert ist.

Vorzugsweise wird der Hinweis über Fernbereichsensoren ohne freie Sicht, d.h. blockierte Sensoren, optisch in einem Display dargestellt.

Weiter bevorzugt wird in dem Display eine Darstellung des Egofahrzeugs und dessen nahes Umfeld erzeugt, wobei aus der Darstellung optisch ersichtlich ist, welcher Fernbereichsensor keine freie Sicht auf den Querverkehr hat. Es kann also ein blockierter oder auch beide blockierte Fernbereichsensoren als Hinweis dargestellt werden.

Weiter bevorzugt werden die aus der Nahbereichsdetektion ermittelten Abstände zu Hindernissen in einer Umfeldkarte eingetragen und es erfolgt eine Auswertung der Umfeldkarte im Bereich der vermuteten Sichtverbindung der Fernbereichsensoren zu möglichem Querverkehr. Dabei wird vorzugsweise die Wahrscheinlichkeit berechnet, wann eine Sichtverbindung eines blockierten Fernbereichsensors erfolgt.

Weiter bevorzugt wird der Hinweis auf eine blockierten Sichtverbindung durch ein Symbol, insbesondere ein farbiger Balken, gebildet, welches im Bereich des blockierten Fernbereichsensors in der Darstellung des Fahrzeugumfeldes eingeblendet wird.

Weiter bevorzugt wird der Hinweis aufgehoben, wenn die Sichtblockierung des Fernbereichsensors aufgehoben ist.

Insbesondere werden sowohl die blockierten als auch die Sichtverbindung aufweisenden Fernbereichsensoren in der Anzeige dargestellt. Auf diese Weise ist der Fahrer immer über den Zustand seines Assistenzsystems informiert und kann sein Fahrverhalten entsprechend anpassen.

Die erfindungsgemäße Vorrichtung zur Durchführung des im Vorangegangenen beschriebenen Verfahrens weist zumindest im Bereich der heckseitigen Ecken eines Kraftfahrzeugs Fernbereichsensoren zur Detektion möglichen Querverkehrs, seitliche Nahbereichsensoren zur Erfassung des nahen Kraftfahrzeugumfeldes, eine Warneinrichtung zur Warnung vor Querverkehr und eine Anzeige auf, in der dargestellt wird, welcher Fernbereichsensor keine Sichtverbindung auf den Querverkehr hat.

Vorzugsweise weist die Vorrichtung eine Einrichtung zur Erzeugung einer Umfeldkarte aus den Messergebnissen der Nahbereichssensoren auf, wobei aus der Umfeldkarte im Bereich der vermuteten Sichtverbindungen zu möglichem Querverkehr die Wahrscheinlichkeit für eine freie Sicht der Fernbereichsensoren ermittelt wird.

Eine bevorzugte Ausführungsform der Erfindung wird nachfolgend anhand der Zeichnungen erläutert. Dabei zeigt
- Fig. 1: eine typische Ausparksituation beim Ausparken aus einer Querparklücke,
- Fig. 2: die Darstellung des Fahrzeugumfeldes einschließlich wesentlicher Informationen in einem Display, und
- Fig. 3: die Darstellung des Fahrzeugumfeldes bei einem durch ein seitliches Hindernis blockierten Fernbereichssensor.

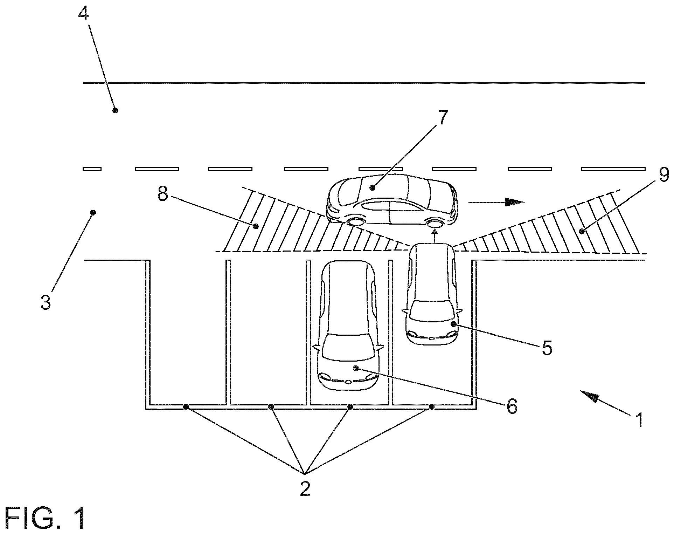

Fig. 1 zeigt einen Parkplatz 1 bestehend aus einer Vielzahl von Querparkplätzen 2, die durch Markierungen voneinander getrennt sind. Dabei erstreckt sich der Parkplatz 1 an einer Straße mit den Fahrspuren 3, 4. In einem Querparkplatz 2 ist ein Fahrzeug 5 im Begriff rückwärts aus dem Querparkplatz in die Fahrspur 3 auszuparken. Dabei ist beifahrerseitig im Nachbarparkplatz ein parkendes Fahrzeug 6 angeordnet, so dass der Fahrer des ausparkenden Fahrzeugs 5 keinen ausreichenden Blick auf den durch das weitere, auf der Fahrspur 3 befindliche Fahrzeug 7 hat, welches die geplante Ausparktrajektorie kreuzt, so dass eine Kollisionsgefahr gegeben ist. Mittels der in den hinteren Fahrzeugecken des ausparkenden Fahrzeugs 5 angeordneten Radarsensoren 8, 9, die in Fig. 1 symbolisch gestrichelt dargestellt sind, sensiert die Warnvorrichtung den durch das Fahrzeug 7 dargestellten Querverkehr und warnt den Fahrer bei kritischen Situationen, wie dies in Fig. 1 dargestellt ist.

Ist allerdings die direkte Sicht auf den Querverkehr und dem Egofahrzeug 5 durch das benachbart parkende Fahrzeug 6 noch verdeckt, so besteht keine Möglichkeit der Erkennung des Querverkehrs, da die Radarstrahlen das benachbarte Fahrzeug 6 nicht durchdringen können. Auch kann mittels der Radarsensoren keine wirkliche Identifikation des seitlich parkenden Fahrzeugs 6 vorgenommen werden. Damit bleiben mögliche Warnungen auf querende Fahrzeuge 7 aus, ohne dass der Fahrer des Egofahrzeugs 5 dies erkennen kann.

Durch im Egofahrzeug angeordnete seitliche Ultraschallsensoren (nicht dargestellt), wie sie beispielsweise bei einem Park-Lenkassistenten vorhanden sind und zur Ausmessung der Parklücken und zum Einparkvorgang verwendet werden, kann das Umfeld des Egofahrzeugs 5 ausgemessen und in eine Umfeldkarte eingetragen werden. Dem Fahrer kann daher durch das Ergebnis der Bestimmung des nahen Umfeldes in Form eines Hinweises mitgeteilt werden, dass das rechte Heckradar 8 aufgrund der Abdeckung durch das parkende Fahrzeug 6 kein freies Sichtfeld hat. Aufgrund dieses Hinweises kann der Fahrer entsprechend vorsichtig fahren.

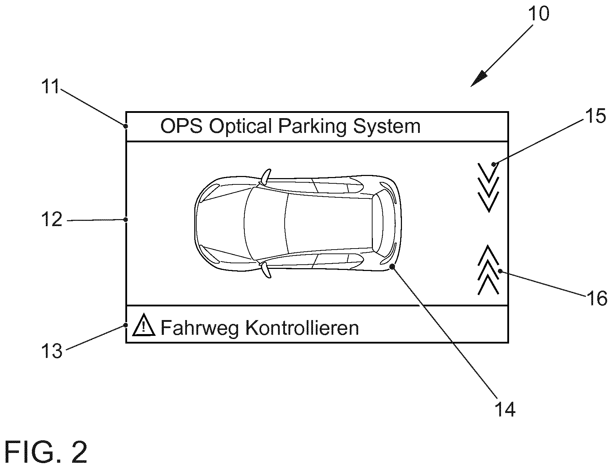

Fig. 2 zeigt die Darstellung des nahen Umfeldes des Egofahrzeugs 5 der Fig. 1 in einem Display 10, welches eine obere Informationsleiste 11, einen Anzeigebereich 12 zur Umfelddarstellung und eine untere Hinweisleiste 13 aufweist. In der oberen Informationsleiste 11 wird angezeigt, welche Assistenzfunktion aktiv ist. In dem Beispiel der Fig. 2 ist das optische Parksystem OPS aktiv. In dem Anzeigebereich 12 ist eine symbolische Fahrzeugdarstellung 14 des Egofahrzeugs 5 der Fig. 1 und dessen nahes Umfeld zu sehen. Da im nahen Umfeld der Fahrzeugdarstellung 14 keine Hindernisse angezeigt werden, ist die Sicht der Heckradarsensoren 8, 9 der Fig. 1 frei und diese Situation wird durch die beiden Symbole 15 und 16 dem Fahrer mitgeteilt. Dabei soll das Symbol 15 symbolisieren, dass das rechte Heckradar 8 freie Sicht hat. Analog symbolisiert das Symbol 16 die freie Sicht des linken Heckradars 9. Sollten sich im nahen Umfeld des Egofahrzeugs 5 in der Fahrzeugdarstellung 14 Hindernisse befinden, so werden diese in dem Anzeigebereich 12 symbolisch dargestellt.

Ferner weist das Display 10 eine untere Hinweisleiste 13 auf, in der aktuelle Informationen an den Fahrer dargestellt werden. Da im vorliegenden Beispiel ein rückwärtiger

Ausparkvorgang stattfindet, wird dem Fahrer angezeigt, dass er den Fahrweg kontrollieren soll.

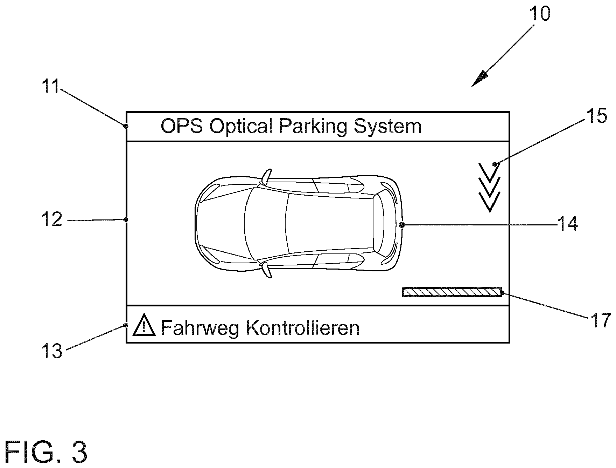

Fig. 3 zeigt die Situation, in der bei einem rückwärtigen Ausparken des Fahrzeugs aus einer Querparklücke ein in einer benachbarten Parklücke parkendes Fahrzeug oder ein sonstiges Hindernis, wie eine Wand zu Beginn des Ausparkmanövers die Sicht eines Heckradars 8, 9 auf den Querverkehr blockiert. Durch die seitlichen Nahbereichssensoren, beispielsweise die seitlichen Ultraschallsensoren eines Park-Lenkassistenten, werden Hindernisse in der nahen Umgebung des Egofahrzeugs detektiert und in eine Umgebungskarte eingetragen. Durch eine Auswertung der Umgebungskarte im Bereich der vermuteten Sichtverbindung zu möglichem Querverkehr wird eine Wahrscheinlichkeit für eine freie Sicht des oder der Radarsensoren und damit deren einwandfreie Funktionalität ermittelt. Für denjenigen Radarsensor, für den keine freie Sicht ermittelt wird, wird in der Umfeldanzeige 12 an der Stelle ein Hinweis eingeblendet, an welcher der Fernbereichssensor keine freie Sicht hat. Der Hinweis kann beispielsweise in Form eine dicken farbigen Balken 17 erfolgen, der anzeigt auf welcher Fahrzeugseite das Heckradar keine freie Sicht ist und daher an der aktuellen Fahrzeugposition noch kein Querverkehr detektiert werden kann. Im dargestellten Fall hätte das linke Heckradar des Fahrzeugs keine freie Sicht. Wenn sich das ausparkende Egofahrzeug in eine Position bewegt hat, in welcher das Heckradar freie Sicht hat, so wird der durch den Balken 17 symbolisierte Hinweis wieder ausgeschaltet und es wird das Symbol 16 der Fig. 2 für freie Sicht eingeblendet.

Auf diese Weise wird der Fahrer über die Funktionalität der den Querverkehr beobachtenden Fernbereichssensoren, im Beispiel die Heckradarsensoren informiert und kann sein Fahrverhalten entsprechend anpassen. Diese Möglichkeit besteht natürlich auch bei Ausparkvorgängen in Vorwärtsrichtung, wenn das Fahrzeug mit vorderen Fernbereichssensoren für den Querverkehr ausgestattet ist.

### Bezugszeichenliste

- 1: Parkreihe
- 2: Querparkplatz
- 3: Fahrspur
- 4: Fahrspur
- 5: Egofahrzeug
- 6: parkendes Fahrzeug
- 7: querendes Fahrzeug
- 8: Heckradar
- 9: Heckradar
- 10: Display
- 11: Informationsleiste
- 12: Anzeigebereich zur Umfelddarstellung
- 13: Hinweisleiste
- 14: Darstellung Fahrzeug und Umfeld
- 15: Aktivität Heckradar rechts
- 16: Aktivität Heckradar links
- 17: Symbol für Unterbrechung der Sichtverbindung

## Patentansprüche

1. Verfahren zur Warnung eines Fahrers eines Egofahrzeugs (5) vor Querverkehr (7) bei Ausparksituationen, insbesondere rückwärtigen Ausparksituationen, wobei das Egofahrzeug (5) zumindest im Bereich der heckseitigen Fahrzeugecken Fernbereichsensoren (8, 9) zur Detektion von möglichem Querverkehr (7) und seitliche Nahbereichsensoren zur Detektion des nahen Fahrzeugumfeldes aufweist, und wobei eine Warnung erzeugt wird, wenn zumindest einer der Fernbereichssensoren (8, 9) Querverkehr (7) detektiert, wobei das nahe seitliche Umfeld des Egofahrzeugs (5) beim Ausparken vermessen wird, und aus den Ergebnissen der Nahbereichsdetektion ermittelt wird, ob die Fernbereichsensoren (8, 9) freie Sicht auf den Querverkehr (7) hauben, **dadurch gekennzeichnet, dass** ein Hinweis (17) an den Fahrer erzeugt wird, falls einer oder beide Fernbereichsensoren (8, 9) keine freie Sicht auf den Querverkehr (7) haben.

2. Verfahren nach Anspruch 1, **dadurch gekennzeichnet, dass** dem Fahrer mitgeteilt wird, welcher Fernbereichsensor (8, 9) keine freie Sicht auf den Querverkehr (7) hat.

3. Verfahren nach einem der Ansprüche 1 oder 2, **dadurch gekennzeichnet, dass** der Hinweis auf Fernbereichsensoren (8, 9) ohne freie Sicht optisch in einem Display (10) dargestellt wird.

4. Verfahren nach Anspruch 3, **dadurch gekennzeichnet, dass** das Display (10) eine Darstellung (14) des Egofahrzeugs und dessen nahes Umfeld erzeugt, wobei aus der Darstellung (14) optisch ersichtlich ist, welcher Fernbereichsensor (8, 9) keine freie Sicht auf den Querverkehr hat.

5. Verfahren nach einem der vorangegangenen Ansprüche, **dadurch gekennzeichnet, dass** die aus der Nahbereichsdetektion ermittelten Abstände zu Hindernissen in einer Umfeldkarte eingetragen werden und eine Auswertung der Umfeldkarte im Bereich der vermuteten Sichtverbindung der Fernbereichsensoren (8, 9) zu möglichem Querverkehr (7) erfolgt.

6. Verfahren nach Anspruch 5, **dadurch gekennzeichnet, dass** die Wahrscheinlichkeit berechnet wird, wann eine Sichtverbindung eines blockierten Fernbereichsensors (8, 9) erfolgt.

7. Verfahren nach einem der Ansprüche 3 bis 6, **dadurch gekennzeichnet, dass** der Hinweis (17) auf eine blockierte Sichtverbindung durch ein Symbol, insbesondere durch einen farbigen Balken, realisiert wird, welches in dem Bereich des blockierten Fernbereichsensors (8, 9) in der Darstellung (14) des Fahrzeugsumfeldes eingeblendet wird.

8. Verfahren nach einem der vorangegangen Ansprüche, **dadurch gekennzeichnet, dass** der Hinweis (17) aufgehoben wird, wenn die Sichtblockierung des Fernbereichsensors (8, 9) aufgehoben ist.

9. Verfahren nach einem der Ansprüche 3 bis 8, **dadurch gekennzeichnet, dass** sowohl die blockierten als auch die Sichtverbindung aufweisenden Fernbereichsensoren (8, 9) in der Anzeige dargestellt werden.

10. Vorrichtung zur Durchführung des Verfahrens zur Warnung eines Fahrers eines Egofahrzeugs (5) vor Querverkehr (7) bei Ausparksituationen nach einem der vorangegangenen Ansprüche mit Fernbereichsensoren (8, 9) zur Detektion möglichen Querverkehrs, mit Nahbereichsensoren zur Erfassung des nahen Kraftfahrzeugumfeldes und mit einer Warneinrichtung zur Warnung vor Querverkehr,
**dadurch gekennzeichnet, dass**
die Vorrichtung eine Anzeige (10) aufweist, in der dargestellt wird, welcher Fernbereichsenor keine Sichtverbindung auf den Querverkehr hat.

11. Vorrichtung nach Anspruch 10, **dadurch gekennzeichnet, dass** die Vorrichtung eine Einrichtung zur Erzeugung einer Umfeldkarte aus den Messergebnissen der Nahbereichsensoren aufweist, wobei aus der Umfeldkarte im Bereich der vermuteten Sichtverbindungen zu möglichem Querverkehr (7) die Wahrscheinlichkeit für eine freie Sicht der Fernbereichsensoren (8, 9) ermittelt wird.

## Claims

1. Method for warning a driver of a first-party vehicle (5) against cross traffic (7) when leaving a parking space, in particular when reversing from a parking space, the first-party vehicle (5) having, at least in the region of the rear vehicle corners, long-range sensors (8, 9) for detecting possible cross traffic (7) and lateral short-range sensors for detecting the nearby vehicle environment, and a warning being generated if at least one of the long-range sensors (8, 9) detects cross traffic (7), wherein the nearby lateral environment of the first-party vehicle (5) is measured when leaving a parking space, and the results from the short-range detection are used to determine whether the long-range sensors (8, 9) have a clear view of the cross traffic (7), **characterized in that** an indication (17) is generated for the driver if one or both long-range sensor(s) (8, 9) do(es) not have a clear view of the cross traffic (7).

2. Method according to Claim 1, **characterized in that** the driver is informed of which long-range sensor (8, 9) does not have a clear view of the cross traffic (7).

3. Method according to either of Claims 1 and 2, **characterized in that** the indication of long-range sensors (8, 9) without a clear view is optically presented in a display (10).

4. Method according to Claim 3, **characterized in that** the display (10) generates a representation (14) of the first-party vehicle and its nearby environment, in which case it is optically clear from the representation (14) which long-range sensor (8, 9) does not have a clear view of the cross traffic.

5. Method according to one of the preceding claims, **characterized in that** the distances to obstacles determined from the short-range detection are entered in an environment map and the environment map is evaluated in the region of the assumed visual contact between the long-range sensors (8, 9) and possible cross traffic (7).

6. Method according to Claim 5, **characterized in that** the likelihood of when there is visual contact of a blocked long-range sensor (8, 9) is calculated.

7. Method according to one of Claims 3 to 6, **characterized in that** the indication (17) of blocked visual contact is effected by means of a symbol, in particular by means of a colored bar, which is inserted in the representation (14) of the vehicle environment in the region of the blocked long-range sensor (8, 9).

8. Method according to one of the preceding claims, **characterized in that** the indication (17) is removed when the visual blocking of the long-range sensor (8, 9) is removed.

9. Method according to one of Claims 3 to 8, **characterized in that** both the blocked long-range sensors (8, 9) and the long-range sensors (8, 9) having visual contact are represented in the display.

10. Device for carrying out the method for warning a driver of a first-party vehicle (5) against cross traffic (7) when leaving a parking space according to one of the preceding claims, having long-range sensors (8, 9) for detecting possible cross traffic, having short-range sensors for sensing the nearby motor vehicle environment and having a warning device for warning against cross traffic, **characterized in that** the device has a display (10) which displays which long-range sensor does not have visual contact with the cross traffic.

11. Device according to Claim 10, **characterized in that** the device has an apparatus for generating an environment map from the measurement results from the short-range sensors, the likelihood of a clear view of the long-range sensors (8, 9) being determined from the environment map in the region of the assumed visual contact with possible cross traffic (7).

## Revendications

1. Procédé destiné à avertir un conducteur d'un égo-véhicule (5) d'un trafic transversal (7) lors de situations de sortie de stationnement, notamment de situations de sortie de stationnement en marche arrière, dans lequel l'égo-véhicule (5) comporte au moins, dans la région du côté arrière des angles du véhicule, des capteurs de zone lointaine (8, 9) pour la détection d'un éventuel trafic transversal (7) et des capteurs latéraux de zone proche pour la détection de l'environnement proche du véhicule, et dans lequel un avertissement est généré lorsqu'au moins l'un des capteurs de zone lointaine (8, 9) détecte un trafic transversal (7), dans lequel l'environnement latéral proche de l'égo-véhicule (5) est mesuré lors de la sortie du stationnement, et il est déterminé à partir des résultats de la détection de zone proche si les capteurs de zone lointaine (8, 9) ont une vision dégagée sur le trafic transversal (7), **caractérisé en ce qu'**une indication (17) est générée pour le conducteur dans le cas où l'un des capteurs de zone lointaine (8, 9) ou les deux n'a aucune vision dégagée sur le trafic transversal (7).

2. Procédé selon la revendication 1, **caractérisé en ce que** le conducteur est informé du capteur de zone lointaine (8, 9) qui n'a aucune vision dégagée sur le trafic transversal (7).

3. Procédé selon l'une quelconque des revendications 1 ou 2, **caractérisé en ce que** l'indication concernant les capteurs de zone lointaine (8, 9) est représentée optiquement sur un afficheur (10) sans vision dégagée.

4. Procédé selon la revendication 3, **caractérisé en ce que** l'afficheur (10) génère une représentation (14) de l'égo-véhicule et de son environnement proche, dans lequel il est possible de voir optiquement à partir de la représentation (14) le capteur de zone lointaine (8, 9) qui n'a aucune une vision dégagée sur le trafic transversal.

5. Procédé selon l'une quelconque des revendications précédentes, **caractérisé en ce que** les distances d'obstacles déterminées à partir de la détection de zone proche sont enregistrées dans une carte de l'environnement et **en ce qu'**une évaluation de la carte de l'environnement dans la région de la vue directe supposée des capteurs de zone lointaine (8, 9) est effectuée afin d'obtenir un éventuel trafic transversal (7).

6. Procédé selon la revendication 5, **caractérisé en ce que** la probabilité des instants où une vue directe d'un capteur de zone lointaine (8, 9) est occultée est calculée.

7. Procédé selon l'une quelconque des revendications 3 à 6, **caractérisé en ce que** l'indication (17) d'une vue directe occultée par un symbole, notamment par une barre colorée, est réalisée, laquelle indication est intégrée dans la région du capteur de zone lointaine (8, 9) occulté dans le représentation (14) de l'environnement du véhicule.

8. Procédé selon l'une quelconque des revendications précédentes, **caractérisé en ce que** l'indication (17) est supprimée lorsque l'occultation du capteur de zone lointaine (8, 9) est supprimée.

9. Procédé selon l'une quelconque des revendications 3 à 8, **caractérisé en ce qu'**on représente sur l'afficheur les capteurs de zone lointaine (8, 9) tant occultés que ceux ayant une vue directe.

10. Dispositif destiné à la mise en oeuvre du procédé destiné à avertir un conducteur d'un égo-véhicule (5) d'un trafic transversal (7) lors de situations de sortie de stationnement selon l'une quelconque des revendications précédentes, comportant des capteurs de zone lointaine (8, 9) pour la détection d'un éventuel trafic transversal, comportant des capteurs de zone proche pour la détection de l'environnement proche du véhicule et comportant un dispositif d'alarme destiné à avertir d'un trafic transversal, **caractérisé en ce que** le dispositif comporte un afficheur (10) sur lequel est représenté le capteur de zone lointaine qui n'a aucune vue directe sur le trafic transversal.

11. Dispositif selon la revendication 10, **caractérisé en ce que** le dispositif comporte un dispositif de génération d'une carte de l'environnement à partir des résultats de mesure des capteurs de zone proche, dans lequel la probabilité d'avoir une vision dégagée des capteurs de zone lointaine (8, 9) est déterminée à partir de la carte de l'environnement dans la région des vues directes supposées d'un éventuel trafic transversal (7).
